# EUROPEAN PATENT SPECIFICATION

(11) **EP 2 250 450 B1**
(45) Date of publication and mention of the grant of the patent: **21.02.2018**
(21) Application number: 08871147.8
(22) Date of filing: 17.10.2008
(51) Int. Cl.: F25C 1/04

(54) **ICE MAKER AND REFRIGERATOR HAVING THE SAME**
EISERZEUGER UND KÜHLSCHRANK DAMIT
GÉNÉRATEUR DE GLACE ET RÉFRIGÉRATEUR POURVU DUDIT GÉNÉRATEUR

(30) Priority: 17.01.2008 KR 20080005294
(43) Date of publication of application: 17.11.2010
(73) Proprietor: LG Electronics Inc., Seoul 150-721 (KR)
(72) Inventor: AN, Si Yeon, Seoul 153-802 (KR); KIM, Seong Jae, Seoul 153-802 (KR); LEE, Dong Hoon, Seoul 153-802 (KR); JOUNG, Il Wook, Seoul 153-802 (KR)
(74) Representative: Boult Wade Tennant
(86) International application number: PCT/KR2008/006132
(87) International publication number: WO 2009/091112

(56) References cited:
- US-A- 2 545 558
- US-A- 3 217 510
- US-A- 4 142 378
- US-A- 4 635 444
- US-A- 4 706 465
- US-A- 4 852 359
- US-A- 4 852 359
- US-A- 4 916 921
- US-A- 5 187 948
- US-A- 6 041 607
- US-A1- 2004 177 638
- US-A1- 2006 090 485
- US-A1- 2006 137 382
- US-A1- 2007 068 189
- US-A1- 2007 102 447
- US-B1- 6 286 324
- US-B1- 6 513 337

## Description

### Technical Field

The present invention relates to an ice maker and a refrigerator having the same. More specifically, the present invention relates to an ice maker capable of preventing ice from being stuck while ejecting ice, with an increased amount of ice.

### Background Art

An ice maker is a kind of a device mounted in a freezing apparatus to make ice by using cold air. Typically, water is held in a predetermined container of refrigerators, water purifiers, vending machines, ice making devices and variations of them (hereinafter, refrigerators), and then the water is frozen at temperatures below freezing to make ice.

Ice is made in a simple method according to a conventional ice maker. That is, a tray holding water is put in a freezing compartment of which the temperature is below freezing to make ice. However, with improvement of standard of living and development of technology, a new system has been developed in that ice making and ejecting is performed automatically without help of human's hands.

Recently has been released an ice maker which is capable of supplying water to a tray automatically to make the water ice and which includes a heating device installed adjacent to the tray to heat the tray such that the ice may be ejected

The amount of the ice which is producible per the unit time is determined the number of cells provided in the tray. The cell is a predetermined space partitioned in the tray to accommodate water.

US2006137382A1 discloses an automatic icemaker that can be disposed in one part of a freezer and automatically make ice pieces The icemaker is provided with temperature distribution forming means which forms a temperature distribution in which freezing progresses from the open side of ice partitions of an ice-tray and is completed near the bottom side of the ice partitions.

US5187948A discloses an ice maker according to the preamble of claim 1, for use in a domestic refrigerator/freezer which makes clear ice bodies. The ice maker comprises a support arranged to have an ice body formed thereon. The support is refrigerated to a below-freezing temperature and a container adapted to hold a body of water is moved to move liquid water contained therein uniformly about the support suitable to cause a clear substantially symmetrical ice body to build up outwardly on the refrigerated support.

US4706465A discloses an icemaker including a freezer mould. An ice piece ejector is rotatable in only one direction and has its axle along the longitudinal central axis of the mould. An ice piece ejector guide is secured to the back side of the mould. The guide and rotating ejector cooperate to move the ice pieces above cavities between the guide and axle of the rotating ejector and force the ice pieces onto a stripper member to thereby move any previously harvested ice pieces off the stripper member.

### Disclosure of Invention

### Technical Problem

However, if the conventional ice maker is provided in the refrigerator, the size of the ice maker is limited and the number of the cells is also limited.

Accordingly there have been increasing demands of a structure capable of increasing the number of the cells provided in the ice maker. Together with the increased number of the cells, guiding means capable of guiding ejected ice to prevent the ice stuck because of the space limit.

### Technical Solution

To solve the problems, an ice maker according to claim 1 is provided. The ice maker includes a tray accommodating water to make ice; a first control box installed at a side of the tray, the first control box accommodating a predetermined part of a mechanism unit driving the ice maker; and a second control box accommodating the other part of the mechanism unit which is electrically connected with the part of the mechanism unit accommodated in the first control part.

The second control box is provided above the tray.

The second control box is detachably coupled to an upper portion of the first control box.

The mechanism unit includes a driving assembly relating to operations of an ejector ejecting ice out of the tray and an ice amount sensing lever sensing the ice amount; a first circuit board on which electric parts controlling an operation of the driving assembly are mounted; and a second circuit board on which electric parts controlling an overall operation of the ice maker except the operation of the driving assembly are mounted

The driving assembly and the first circuit board are accommodated in the first control box.

The second circuit board is accommodated in the second control box.

A wire communication hole may be formed at the first control box and the second control box for a wire electrically connecting the mechanism unit of the first control box with the mechanism unit of the second control box to pass through.

The ice maker further includes an ejecting guide preventing the ice from being stuck in the second control box, when the ice is ejected from the tray.

The try may include a vertical extension preventing the water from overflowing the tray.

The ejecting guide may be coupled to an upper portion of the vertical extension.

The ice maker may further include a water supply part installed adjacent to the ejecting guide to supply water to the tray.

The water supplied from the water supply part may be drawn into the tray via a path formed at the ejecting guide.

An inner surface of the ejecting guide may have a gentle curvature.

Furthermore, a refrigerator according to claim 6 is provided. The refrigerator includes a body comprising a refrigerating compartment and a freezing compartment; an least one ice-making chamber provided in at least one of the refrigerating compartment, the freezing compartment and doors opening and closing the refrigerating and freezing compartments; and an ice maker according to claim 1.

The refrigerating compartment may be provided in a lower portion of the body and the ice-making chamber may be provided in an inner side surface of the door selectively opening and closing the refrigerating compartment.

The refrigerator may further include an ejecting guide provided beyond the tray to guide the ice ejected out of the tray, an inner surface of the ejecting guide having a gentle curvature.

### Advantageous Effects

The present invention has following advantageous effects.

According to an ice maker according to an exemplary embodiment, a mechanism unit relating an operation of the ice maker is accommodated in two control boxes dividedly. This is more advantageous in the matter of space utilization, compared with a conventional ice maker including a whole mechanism unit accommodated in a single control box.

Furthermore, the length of a tray provided in the ice maker and the number of cells provided in the tray may be increased As a result, the amount of the ice made per the unit time also may be increased.

Still further, an ejecting guide is provided in the ice maker according to the exemplary embodiment. As a result, even when a control box is provided above the tray, ice may be prevented from being stuck during the ejecting of the ice.

### Brief Description of the Drawings

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a perspective view illustrating an ice maker according to an exemplary embodiment, which is mounted at a door of a refrigerator;
FIG. 2 is an exploded perspective view of the ice maker according to the embodiment;
FIG. 3 is a perspective view of the ice maker;
FIG. 4 is a perspective view of the ice maker, in case that a second control box of the ice maker is separated from a first control box; and
FIG. 5 is a side view of the ice maker, in case that ice is ejected from a tray provided in the ice maker.

### Best Mode for Carrying Out the Invention

Reference will now be made in detail to the specific embodiments of the present invention, examples of which are illustrated in the accompanying drawings. Wherever possible, the same reference numbers will be used throughout the drawings to refer to the same or like parts.

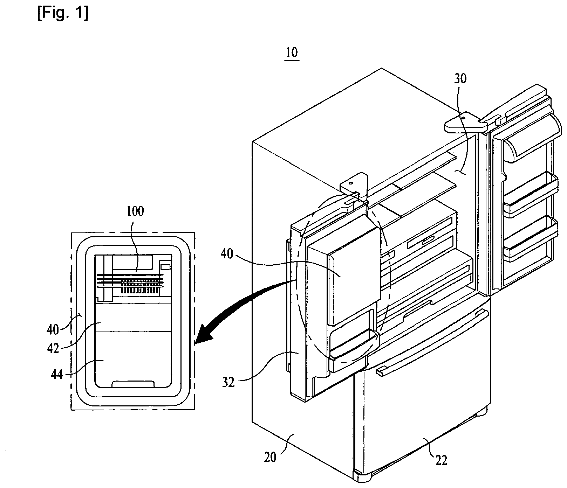

FIG. 1 is a perspective view illustrating an ice maker according to an exemplary embodiment which is mounted at a door of a refrigerant.

In reference to FIG. 1, an ice maker 100 according to the exemplary embodiment may be installable to a water purifier, vending machine and e.g. and this embodiment presents that the ice maker 100 is installed in a refrigerator 10.

The refrigerator 10 includes a freezing compartment 20 and a refrigerating compartment 30 which store food items, respectively. Doors 22 and 32 are coupled to fronts of the freezing and refrigerating compartments to open and close the freezing and refrigerating compartments, respectively. This embodiment presents a bottom freezing type refrigerator having the freezing compartment 20 positioned under the refrigerating compartment 30 and this embodiment may be applicable to other various types of refrigerators.

Two doors 32 of the refrigerating compartment 30 are hinge-coupled to opposite sides of a refrigerator body to be closable in a right-and-left direction and a single door 22 of the freezing compartment 20 is coupled to the body to be able to slide in a forward-and-backward direction with respect to the refrigerator body.

Here, the door 22 of the freezing compartment 20 and the doors 32 of the refrigerating compartment 30 may be positioned variably according to the positions of the refrigerating and freezing compartments. For example, this embodiment may be applicable to a top-mount type, a side-by-side type and variations of them.

An ice-making chamber 40 may be provided in one of the two refrigerating compartment doors 32. A predetermined airtight space surrounded by a frame may be formed at a rear surface of the refrigerating compartment door 32 and the ice-making chamber 40 may be formed in the space. It is preferable that the ice-making chamber 40 is heat-insulated not to heat-exchange with the refrigerating compartment 30, because the ice-making chamber 40 is adjacent to the refrigerating compartment 30.

Of course, it is possible to form the ice-making chamber 40 within the freezing compartment 20 or the refrigerating compartment 30. Considering user access convenience and utilization efficiency of inner space of the refrigerator, it is preferable that the ice-making chamber 40 is provided at the door 32 of the refrigerating compartment 30.

An ice maker 100 is provided in the ice-making chamber 40. An ice bank 42 and a dispenser 44 are provided under the ice maker 100. Ice is stored in the ice bank 42 temporarily and the ice is discharged via the dispenser 44 according to the user request.

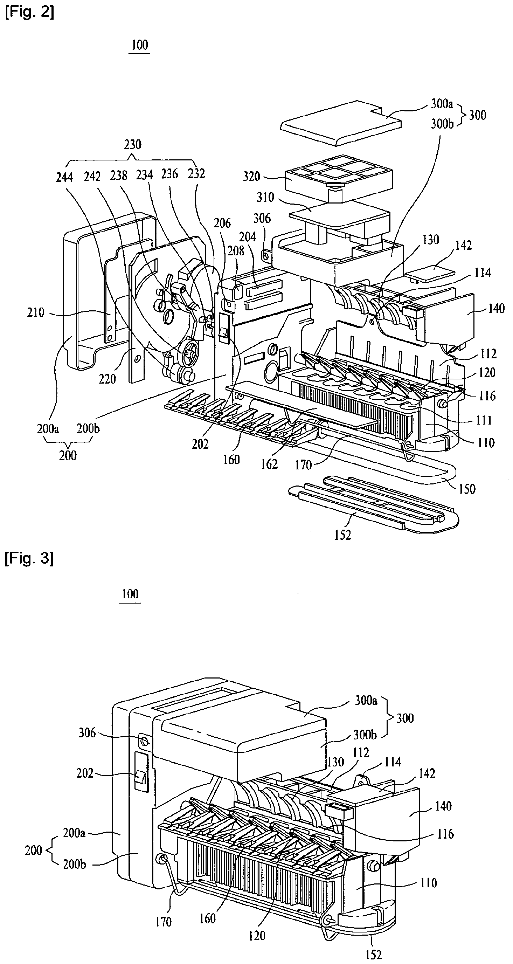

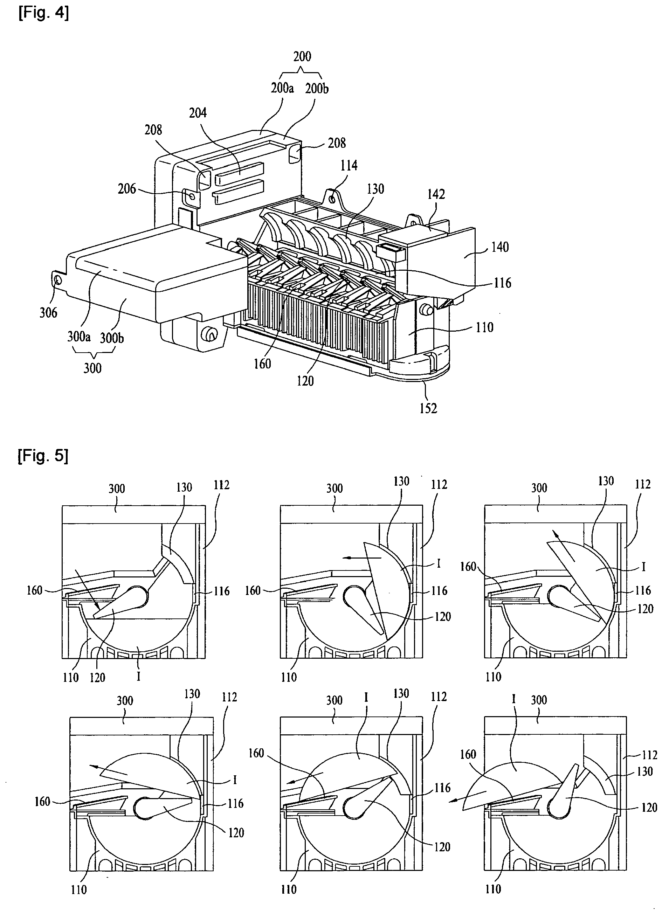

FIG. 2 is an exploded perspective view of the ice maker according to the embodiment. FIG. 3 is a perspective view of the ice maker. FIG. 4 is a perspective view illustrating the ice maker, if a second control box of the ice maker is separated from a first control box.

In reference to FIGS. 2 to 4, the ice maker 100 according to the exemplary embodiment includes a tray 110, a first control box 200 and a second control box 300. The tray 110 accommodates water to make ice. The first control box 200 installed at a side of the tray 110 accommodates some parts of a mechanism unit driving the ice maker 100 and the second control box 300 accommodates the other parts of the mechanism unit electrically connected with the part of the mechanism unit accommodated by the first control box 200.

A predetermined space is formed in the tray 110 and water is held in the space to make ice. Specifically, the tray includes at least one cell 111 accommodating the water to make ice and an opening is formed at a top of the cell 111. Thus, the water is supplied via the opening and the ice is separated from the tray via the opening. The tray 1110 may be an aggregate of the plural cells 111.

The cell may be formed in various shapes and this embodiment presents a hemisphere shaped cell, considering simplicity of ice ejecting.

A support 112 may be provided at a rear of the tray 110 to secure the ice maker 100 to the ice-making chamber 40. A fastening hole 114 may be formed at an upper portion of the support 112 and the support 112 may be fastened to the ice-making chamber 40 through the fastening hole 114 by a bolt, for example.

An ejector 120 is provided in the ice maker 100 to eject the ice, once ice is made. The ejector 120 is provided along a longitudinal direction of the tray 110 and here the longitudinal direction means a direction in which the cells 111 stands in line. As the ejector 120 rotates, the ice is pushed upward to be ejected out of the tray 110.

A heater 150 may be provided under the tray 110 to melt the ice partially and then to separate the ice from the tray 110. The heater 150 may be mounted at a predetermined portion provided under the tray 110 and it is separated from the outside by a heat cover 152.

A discharge guide 160 may be provided at a front of the tray 110 to guide the ice ejected out of the tray 110 toward the ice bank (42, see FIG. 1). The discharge guide 160 has an oblique inclined downward to the tray 110 and it guides the ice to be dropped to the ice bank 42.

The discharge guide 160 is secured to a discharge guide support 162 and the discharge guide support 162 is secured to the front of the tray 110, such that the discharge guide 160 may be secured to the tray 110.

An ice amount sensing lever 170 may be provided at a lower front of the tray 110 to sense if the amount of ice within the tray 110 is full enough. The position of the ice amount sensing lever 170 may be changeable according to the amount of the ice accommodated in the tray 110 and a hall sensor (not shown) provided in the control box, which will be described later, senses position changes of the ice amount sensing lever 170 to sense the amount of the ice inside the ice bank 42.

As mentioned above, the first control box 200 is coupled to the side of the tray 110 and it accommodates some parts of the mechanism unit driving the ice maker. Specifically, the first control box 200 is configured of a first case 200a and a second case 200b coupled to the first case 200a to form a predetermined space. The first control box 200 may be provided in a longitudinal direction of the tray 110 and a switch 202 is provided at the first control box 200 to switch on and off the ice maker 100.

Here, the mechanism unit includes a driving assembly 230, a first circuit board 210 and a second circuit board 310. The driving assembly 230 relates to the operations of the ejector 120 ejecting the ice and the ice amount sensing lever 170 sensing the ice amount. On the first circuit board 210 are mounted electric parts controlling the operation of the driving assembly 230 and on the second circuit board 310 are mounted electric parts controlling an overall operation of the ice maker 100 except the operation of the driving assembly 230.

It is preferable that the driving assembly 230 is provided in the first control box 200 provided along the longitudinal direction of the tray 110, because a rotation shaft relating the motion of the ejector 120 and the ice amount sensing lever 170 is also provided in the longitudinal direction. Here, a middle panel 220 may be provided in the first control box 200 and the driving assembly 230 is secured to the inner portion of the first control box 200 by the middle panel 220.

Next, the structure of the driving assembly 230 will be described

First of all, a motor 232 is provided in the driving assembly 230 to transmit a driving force to the ejector 120 and the ice amount sensing lever 170. Furthermore, an ejector driving shaft 234 is rotated by the motor 232 to rotate the ejector 120. As the ejector driving shaft 234 is rotating, the ejector 120 is rotating together such that the ice is ejected out of the tray 110.

An arm lever 238 is provided in the driving assembly 230 and the arm lever 238 transmits the rotational force of the ejector driving shaft 234 to the ice amount sensing lever 170, such that the ice amount sensing lever 170 may reciprocate. The arm lever 238 receives the force from a cam 236 provided to drive the arm lever 238 whenever the ejector driving shaft 234 makes one rotation.

At this time, an ice amount sensing lever driving shaft 244 is further provided to drive the ice amount sensing lever 170 and the ice amount sensing lever driving shaft 244 is rotated by a driven gear 242 transmitting the rotational force of the arm lever 238 to the ice amount sensing lever driving shaft 244. The ice sensing lever 170 reciprocates with a trace of circular arcs with respect to the ice amount sensing lever driving shaft 244.

The ejector 120 is rotated by the driving assembly 230 to eject the ice out of the tray 110. At this time, the ice amount sensing lever 170 reciprocates, that is, rotates about the ice amount sensing lever driving shaft 244 repeatedly. Specifically, the ice amount sensing lever 170 rotates upward and rotates downward again to be positioned above the ice bank 42 such that the ice amount may be sensed

The structure of the driving assembly 230 is not limited as described above and it may be variable according to the configuration of the ice maker 100.

In the meantime, the first circuit board 210 and the second circuit board 310 may be configured of printed wiring boards (PWB) which can be called as printed circuit boards (PCB). PWB or PCB is a circuit board on which electric parts are mounted to electrically connect among parts or signal wires.

As mentioned above, the electric parts controlling the operation of the driving assembly 230 are mounted on the first circuit board 210 and the electric parts controlling the overall operation of the ice maker 100, except the driving assembly 230, are mounted on the second circuit board 310.

The ice maker 100 further includes the second control box 300 which accommodates the other parts of the mechanism unit electrically connected with the parts of the mechanism unit accommodated by the first control box 200. The second control box 300 includes a third case 300a and a fourth case 300b coupled to the third case 300a to form a predetermined space.

As shown in FIG. 2, the driving assembly 230 and the first circuit board 210 of the mechanism unit are accommodated by the first control box 200. The second circuit board 310 is accommodated by the second control box 300.

In an example which is not part of the invention, the first and second circuit boards 210 and 310 of the mechanism unit may be accommodated by the second control box 300. In this case, the driving assembly 230 may be accommodated by the first control box 200.

In any cases, the mechanism unit accommodated by the first control box 200 should be electrically connected with the mechanism unit accommodated by the second control box 300 to control the operation of the ice maker 100.

Furthermore, a protection panel 320 is provided to project the mechanism unit accommodated by the second control box 300.

Here, wire communication holes 208 may be provided at the first and second control boxes 200 and 300 and wires pass through the wire communication holes 208 to electrically connect the first control box 200 with the second control box 300. Although the first and second circuit boards 210 and 310 and the driving assembly 230 are provided in the first and second control boxes 200 and 300 dividedly, the circuit boards 210 and 310 can be electrically connected with the driving assembly 230 via the wire communication holes 208.

In an example which is not part of the invention, the second control box 300 may be separately installed outside the ice-making chamber 40 accommodating the ice maker 100 and it may be provided above or below the tray 110.

As shown in FIGS. 2 to 4, the second control box 300 is detachably coupled to an upper portion of the first control box 200. Specifically, at least one coupling guide 204 is provided to guide the second control box 300 coupled to the upper portion of the first control box 200. At this time, a projection (not shown) provided at the second control box 300 is guided between the coupling guides 204 in a forward and backward direction of the ice maker 100 such that the second control box 300 may be coupled to or separated from the first control box 200.

A first control box coupling hole 206 is provided at the first control box 200 and a second control box coupling hole 306 is provided at the second control box 300. As a result, after the first control box 200 is coupled to the second control box 300, the two control boxes 200 and 300 may be fastened by a bolt via the control box coupling holes.

It may be more advantageous in the matter of space utilization to accommodate the mechanism unit in the first and second control boxes 200 and 300 dividedly, than to accommodate the whole mechanism unit in a single control box.

If the single control box accommodating the whole mechanism unit is provided at the side of the tray 110, useable space in a longitudinal direction of the tray 110 is insufficient and the length of the tray is short accordingly, considering that the ice maker 100 is installed within the ice-making chamber 40. As a result, the number of the cells 111 of the tray 110 should be reduced and the amount of the ice made per unit time could be reduced

In contrast, according to this embodiment, only the part of the mechanism unit which should be provided at the side of the tray 110 in the longitudinal direction of the tray 110, for example, the driving assembly 230 is accommodated in the first control box 200 and the other part of the mechanism unit is accommodated in the second control box 300 and then the second control box 300 is installed in the predetermined portion with enough space. As a result, this embodiment may have an advantage in that the length of the tray 110 is increased

The number of the cells 111 provided in the tray 110 may be increased, which will increase the amount of the ice per the unit time. It may be identified substantially that the ice amount made per day in the ice maker 100 according to the embodiment is increased by 25%, compared with the ice amount made per day in the conventional ice maker.

In case that the second control box 300 coupled to the upper portion of the first control box 200 to be positioned above the tray 110, the ejected ice might be stuck in the second control box 300.

If the ice is ejected out of the tray 110 in the ice maker 100 according to the exemplary embodiment, an ejecting guide 130 is further provided beyond the tray 110 to guide the ice not as to be stuck at the second control box 300.

It is preferable that the ejecting guide 130 is formed in a shape corresponding to a trace of the ejected ice, to prevent the ice from being stuck in the second control box 300.

As mentioned above, an inner surface shape of the cell is a concave hemisphere. If the ice is formed in a hemisphere shape, it is preferable that the inner surface of the ejecting guide 130 has a gentle curvature to eject the ice from the cell 111 with gently tracing circular arcs.

A vertical extension 116 may be further provided to prevent the water from overflowing the tray 110. In this case, the ejecting guide 130 may be coupled to an upper portion of the vertical extension 116 and it is preferable that the vertical extension 116 is approximately 10mm in height.

A water supply part 140 may be further provided at a predetermined portion of the ejecting guide 130 to supply water to the tray 110. A water supply part cover 142 is coupled to an upper portion of the water supply part 140.

Here, the water supplied from the water supply part 140 may be supplied to each of the cells 111 via a path (not shown) formed at the ejecting guide 130.

FIG. 5 is a diagram illustrating a side of the ice maker according to the exemplary embodiment, if ice is ejected from the tray.

In reference to FIG. 5, once ice is made, the heater 150 is operated to melt some surface of ice in close contact with the tray 110. As the motor 232 is operated and the ejector 120 is rotated, the ice is moved.

With the rotation of the ejector 120, the ice moves to the rear of the tray 110, with a trace of circular arcs, and the ice moves to the front of the tray 110 by the counteraction of the ejecting guide 130 again.

Hence, the ice supported by the ejector may move forward to contact with a top of the ejecting guide 160 and the ice may move downward along the oblique of the ejecting guide 160, such that the ice is ejected out of the tray 110.

At this time, during the ice ejecting, the ejecting guide 130 guides the ice moving upward to be discharged gently and smoothly, without contacting with or being stuck at the second control box 300.

## Claims

1. An ice maker (100) comprising:
a tray (110) accommodating water to make ice;
a first control box (200) installed at a side of the tray, the first control box accommodating a predetermined part of a mechanism unit driving the ice maker; and
a second control box (300) accommodating the other part of the mechanism unit which is electrically connected with the part of the mechanism unit accommodated in the first control box,
**characterised by**
an ejecting guide (130) provided beyond the tray for preventing the ice from being stuck at the second control box (300), when the ice is ejected from the tray (110),
wherein the second control box (300) is provided above the tray and is detachably coupled to an upper portion of the first control box (200),
the mechanism unit comprises:
a driving assembly (230) relating to operations of an ejector (120) ejecting ice out of the tray (110) and an ice amount sensing lever (170) sensing amount of the ice;
a first circuit board (210) on which electric parts controlling an operation of the driving assembly are mounted, the driving assembly and the first circuit board being accommodated in the first control box (200); and
a second circuit board (310) on which electric parts controlling an overall operation of the ice maker except the operation of the driving assembly are mounted, the second circuit board being accommodated in the second control box (300), wherein at least one coupling guide (204) is provided to guide the second control box (300) coupled to the upper portion of the first control box (200), and
a first control box coupling hole (206) is provided at the first control box (200) and a second control box coupling hole (306) is provided at the second control box (300) to fasten the second control box (300) to the first control box (200) by a bolt via the control box coupling holes (206, 306).

2. The ice maker as claimed in claim 1, wherein a wire communication hole (208) is formed at the first control box (200) and the second control box (300) for a wire electrically connecting the mechanism unit of the first control box with the mechanism unit of the second control box to pass through.

3. The ice maker as claimed in claim 1 or 2, wherein the tray comprises a vertical extension (116) preventing the water from overflowing the tray (110), wherein the ejecting guide (130) is coupled to an upper portion of the vertical extension.

4. The ice maker as claimed in one of claims 1 to 3, further comprising a water supply part (140) installed adjacent to the ejecting guide (130) to supply water to the tray (110),
wherein the water supplied from the water supply part (140) is drawn into the tray (110) via a path formed at the ejecting guide (130).

5. The ice maker as claimed in one of claims 1 to 4, wherein an inner surface of the ejecting guide (130) has a curvature.

6. A refrigerator comprising:
a body comprising a refrigerating compartment (20) and a freezing compartment (30); at least one ice-making chamber (40) provided in at least one of the refrigerating compartment (20), the freezing compartment (30) and doors (22, 32) opening and closing the refrigerating and freezing compartments; and
an ice maker (100) according to any one of claims 1 to 5.

7. The refrigerator as claimed in claim 6, further comprising a heater (150) provided under the tray (110) to melt the ice partially and then to separate the ice from the tray, the heater (150) being isolated from the outside by a heater cover (152).

## Patentansprüche

1. Eisbereiter (100), der aufweist:
eine Schale (110) zum Aufnehmen von Wasser für die Eisbereitung;
einen ersten Steuerkasten (200), der an einer Seite der Schale montiert ist, wobei in dem ersten Steuerkasten ein bestimmter Teil einer Mechanismuseinheit aufgenommen ist, die den Eisbereiter antreibt; und
einen zweiten Steuerkasten (300), in dem der andere Teil der Mechanismuseinheit aufgenommen ist, der mit dem in dem ersten Steuerkasten aufgenommenen Teil der Mechanismuseinheit elektrisch verbunden ist,
**gekennzeichnet durch**
eine Auswurfführung (130), die über die Schale hinausgehend ausgebildet ist, um zu verhindern, dass Eis an dem zweiten Steuerkasten (300) hängen bleibt, wenn das Eis aus der Schale (110) ausgeworfen wird,
wobei der zweite Steuerkasten (300) oberhalb der Schale angeordnet und mit einem oberen Bereich des ersten Steuerkastens (200) lösbar verbunden ist,
wobei die Mechanismuseinheit aufweist:
eine Antriebsbaugruppe (230), die den Betriebsfunktionen einer Auswurfvorrichtung (120) zum Auswerfen von Eis aus der Schale (110) zugeordnet ist, und einen Eismengenerfassungshebel (170), der die Eismenge erfasst;
eine erste Platine (210), auf der elektrische Teile zum Steuern des Betriebs der Antriebsbaugruppe angebracht sind, wobei die Antriebseinheit und die erste Platine in dem ersten Steuerkasten (200) aufgenommen sind; und
eine zweite Platine (310), auf der elektrische Teile zum Steuern eines gesamten Betriebs des Eisbereiters mit Ausnahme des Betriebs der Antriebsbaugruppe angebracht sind, wobei die zweite Platine in dem zweiten Steuerkasten (300) aufgenommen ist, wobei
zumindest eine Verbindungsführung (204) zum Führen des mit dem oberen Bereich des ersten Steuerkastens (200) verbundenen zweiten Steuerkastens (300) ausgebildet ist, und
an dem ersten Steuerkasten (200) ein erstes Steuerkastenverbindungsloch (206) ausgebildet ist und an dem zweiten Steuerkasten (300) ein zweites Steuerkastenverbindungsloch (306) ausgebildet ist, um den zweiten Steuerkasten (300) mit Hilfe einer Schraube über die Steuerkastenverbindungslöcher (206, 306) an dem ersten Steuerkasten (200) zu befestigen.

2. Eisbereiter nach Anspruch 1, wobei in dem ersten Steuerkasten (200) und dem zweiten Steuerkasten (300) jeweils ein Drahtverbindungsloch ausgebildet ist, durch die eine elektrische Drahtverbindung, die die Mechanismuseinheit des ersten Steuerkastens mit der Mechanismuseinheit des zweiten Steuerkastens verbindet, hindurchgeführt werden kann.

3. Eisbereiter nach Anspruch 1 oder 2, wobei die Schale eine vertikale Verlängerung (116) aufweist, die ein Überlaufen des Wassers aus der Schale (110) verhindert, wobei die Auswurfführung (130) mit einem oberen Bereich der vertikalen Verlängerung verbunden ist.

4. Eisbereiter nach einem der Ansprüche 1 bis 3, der ferner ein benachbart zur Auswurfführung (130) angeordnetes Wasserzufuhrteil (140) aufweist, um der Schale (110) Wasser zuzuführen, wobei das von dem Wasserzufuhrteil (140) zugeführte Wasser über eine an der Auswurfführung (130) ausgebildete Bahn in die Schale (110) gezogen wird.

5. Eisbereiter nach einem der Ansprüche 1 bis 4, wobei eine innere Oberfläche der Auswurfführung (130) eine Krümmung aufweist.

6. Kühlschrank, der aufweist:
ein Gehäuse, das ein Kühlabteil (20) und ein Gefrierabteil (30) aufweist;
zumindest eine Eisbereitungskammer (40), die in dem Kühlabteil (20) und/oder dem Gefrierabteil (30) und/oder den Türen (22, 32) zum Öffnen und Schließen des Kühl- und des Gefrierabteils angeordnet ist; und
einen Eisbereiter (100) nach einem der Ansprüche 1 bis 5.

7. Kühlschrank nach Anspruch 6, der ferner eine Heizung (150) aufweist, die unter der Schale (110) angeordnet ist, um das Eis teilweise aufzuschmelzen und das Eis anschließend von der Schale zu lösen, wobei die Heizung (150) nach außen mittels einer Heizungsabdeckung (152) isoliert ist.

## Revendications

1. Machine à glaçons (100) comprenant :
un plateau (110) recevant de l'eau pour fabriquer des glaçons ;
un premier boîtier de commande (200) installé au niveau d'un côté du plateau, le premier boîtier de commande recevant une partie prédéterminée d'une unité de mécanisme entraînant la machine à glaçons ; et
un second boîtier de commande (300) recevant l'autre partie de l'unité de mécanisme qui est électriquement connectée à la partie de l'unité de mécanisme reçue dans le premier boîtier de commande ;
**caractérisée par**
un guide d'éjection (130) disposé au-delà du plateau pour empêcher que les glaçons ne soient coincés au niveau du second boîtier de commande (300), lorsque les glaçons sont éjectés du plateau (110),
dans laquelle le second boîtier de commande (300) est disposé au-dessus du plateau et est accouplé de manière amovible à une partie supérieure du premier boîtier de commande (200),
l'unité de mécanisme comprend :
un ensemble d'entraînement (230) relatif au fonctionnement d'un éjecteur (120) éjectant des glaçons du plateau (110) et d'un levier de détection de quantité de glaçons (170) détectant une quantité de glaçons ;
une première carte de circuits imprimés (210) sur laquelle des parties électriques commandant le fonctionnement de l'ensemble d'entraînement sont montées, l'ensemble d'entraînement et la première carte de circuits imprimés étant reçus dans le premier boîtier de commande (200) ; et
une seconde carte de circuits imprimés (310) sur laquelle des parties électriques commandant le fonctionnement global de la machine à glaçons à l'exception du fonctionnement de l'ensemble d'entraînement sont montées, la seconde carte de circuits imprimés étant reçue dans le second boîtier de commande (300),
dans laquelle au moins un guide d'accouplement (204) est fourni pour guider le second boîtier de commande (300) accouplé à la partie supérieure du premier boîtier de commande (200), et
un premier trou d'accouplement de boîtier de commande (206) est disposé au niveau du premier boîtier de commande (200) et un second trou d'accouplement de boîtier de commande (306) est disposé au niveau du second boîtier de commande (300) pour fixer le second boîtier de commande (300) au premier boîtier de commande (200) par un boulon via les trous d'accouplement de boîtier de commande (206, 306).

2. Machine à glaçons selon la revendication 1, dans laquelle un trou de communication par fil (208) est formé au niveau du premier boîtier de commande (200) et du second boîtier de commande (300) pour le passage d'un fil connectant électriquement l'unité de mécanisme du premier boîtier de commande à l'unité de mécanisme du second boîtier de commande.

3. Machine à glaçons selon la revendication 1 ou 2, dans laquelle le plateau comprend une extension verticale (116) empêchant l'eau de déborder du plateau (110), dans laquelle le guide d'éjection (130) est accouplé à une partie supérieure de l'extension verticale.

4. Machine à glaçons selon l'une quelconque des revendications 1 à 3, comprenant en outre une partie d'alimentation en eau (140) installée adjacente au guide d'éjection (130) pour l'alimentation en eau du plateau (110),
dans laquelle l'eau fournie par la partie d'alimentation en eau (140) est attirée dans le plateau (110) via un trajet formé au niveau du guide d'éjection (130).

5. Machine à glaçons selon l'une quelconque des revendications 1 à 4, dans laquelle une surface interne du guide d'éjection (130) présente une courbure.

6. Réfrigérateur comprenant :
un corps comprenant un compartiment de réfrigération (20) et un compartiment de congélation (30) ;
au moins une chambre de fabrication de glaçons (40) disposée dans le compartiment de réfrigération (20) et/ou le compartiment de congélation (30) et/ou des portes (22, 32) ouvrant et fermant les compartiments de réfrigération et de congélation ; et
une machine à glaçons (100) selon l'une quelconque des revendications 1 à 5.

7. Réfrigérateur selon la revendication 6, comprenant en outre un appareil de chauffage (150) disposé sous le plateau (110) pour faire fondre partiellement les glaçons puis séparer les glaçons du plateau, l'appareil de chauffage (150) étant isolé de l'extérieur par un couvercle d'appareil de chauffage (152).
